# EUROPÄISCHE PATENTANMELDUNG

(11) **EP 2 065 534 A1**
(43) Veröffentlichungstag der Anmeldung: **03.06.2009**
(21) Anmeldenummer: 07023239.2
(22) Anmeldetag: 30.11.2007
(51) Int. Cl.: E04D 12/00, B32B 27/32, B32B 27/18, B32B 27/12, B32B 27/02, B32B 5/26, D04H 13/00, D04H 13/02

(54) **Baumaterial aufweisend ein Langzeit-UV-stabilisiertes Lagenmaterial**

(71) Anmelder: Fiberweb Berlin GmbH, 12277 Berlin (DE)
(72) Erfinder: Klausen, Thomas, Dr., 31224 Peine (DE); Golas, Roman, 12249 Berlin (DE); Gruber, Ehrenfried, 47623 Kevelaer (DE)
(74) Vertreter: Maxton Langmaack & Partner

(57) **Zusammenfassung**

Die vorliegende Erfindung betrifft ein Baumaterial aufweisend ein Langzeit-UV-stabilisiertes Lagenmaterial in Form eines Laminats (1), mit einer ersten Lage (2), die vorzugsweise ein Vlies, insbesondere ein ein Polymer enthaltendes Vlies aufweist, mit einer zweiten Lage (3), die zumindest als Verstärkung einer dritten Lage (4) dient, die zumindest ein filmartiges Material aufweist, und mit einer vierten Lage (5), die zumindest ein Polymermaterial und einen UV-Stabilisator aufweist, wobei das Lagenmaterial wasserdampfdurchlässig und wasserundurchlässig ist. Des Weiteren wird ein Verfahren zur Herstellung eines derartigen Baumaterials vorgeschlagen.

## Beschreibung

Die vorliegende Erfindung betrifft ein Baumaterial aufweisend ein Langzeit-UV-stabilisiertes Lagenmaterial in Form eines Laminats, ein Verfahren zu dessen Herstellung sowie verschiedene Verwendungen des Baumaterials.

Baumaterialien, die ein Lagenmaterial aufweisen, sind zum Stand der Technik gehörend und insbesondere auch bei dem Bestreben, einen entsprechenden Wetter- und Klimaschutz bei Gebäuden zu erzielen, unverzichtbar geworden. So geht beispielsweise aus der WO 2005/058 599 A1 ein Verfahren zum Herstellen einer Unterdeckbahn für Dächer hervor. Bei dem dort vorgestellten Verfahren wird ein Vlies aus Kunststoff mit einer PU-Beschichtung versehen, wobei der so gebildete Verbund atmungsaktiv sein solle. Die PU-Beschichtung wird durch die Diffusionsoffenheit des PU-Materials sichergestellt. Um eine gute Haftung des PU-Materials auf dem Vlies zu gewährleisten, werden in der Druckschrift verschiedenen Mittel vorgeschlagen, wie eine Verbindung herzustellen sei. Neben Haftvermittlern wird auch Bezug genommen auf verschiedene Oberflächentemperaturen, bei denen die Verarbeitung erfolgen solle. Aus der DE 10 2004 059 812 A1 geht wiederum ein anderer Einsatzbereich für ein Lagenmaterial hervor. Dort wird eine sogenannt Dampfbremse beschrieben, die gewährleisten soll, dass eine Holzfeuchte in Folge von Wasserdampfdiffusion in einem Bereich von Sparren nicht zu hoch wird. Die dort vorgestellte Dampfbremse ist vorzugsweise mittels eines Gewebes, eines Geleges, eines Gewirkes und/oder einer Vliesstruktur verstärkt. Eine andere Ausgestaltung einer Dachabdichtung geht aus der DE 10 2006 033 803 A1 hervor. Dort wird eine Vliesschicht hydrophil ausgebildet. Dadurch soll eine verbesserte Verankerung von Mörtel, Beton, Kleber oder sonstigen Bindemitteln verbessert und die auf diese Weise geschaffene Vliesbahn in Einsatzbereichen wie Abdichtungen, Entkoppelungen, Drainagen oder Anschlussstreifen bzw. Fugenbändem einsetzbar sein. Das Vlies mit aufgetragenem Mörtel, Kleber oder ähnlichem Material bildet hierbei ein Laminat, das im Baubereich eingesetzt werden kann. Aus der EP 0570215 wiederum geht ein Lagenmaterial hervor, das als Dachunterspannbahn einzusetzen sei. Dieses Lagenmaterial weist ein Vliesmaterial und eine gestreckte Filmlage auf. Das Vliesmaterial ist von Hause aus luftdurchlässig. Eine Wasserundurchlässigkeit wird durch den mikroporösen Film eingestellt. Das Vlies ist mit dem Film nicht vollflächig verbunden. Vielmehr sollen beide Lagen diskontinuierlich miteinander verbunden sein, um dadurch eine Störung einer Dampfdurchlässigkeit zu vermeiden. Aus der DE 10 2005 035 246 A1 geht ein weiteres Verfahren zur Herstellung einer Bahn hervor, wobei die Bahn vorzugsweise diffusionsoffen sein solle. Die Bahn soll bei Neubauten, bei einer Sanierung, bei Umdeckungen, bei nachträglichem Ausbau eines Daches als Unterspann- oder Unterdeckschalungsbahn, als Wasser- und/oder Dampf- und/oder Luftsperre oder als Fassadenbahn einsetzbar sein. Daher weist die Bahn eine Schutzschicht, eine Funktionsschicht und eine Verstärkungsschicht auf, die miteinander verbunden sind mittels einer Thermokaschierung, die eine punktweise Verschweißung zwischen der Schutzschicht und der Funktionsschicht erzielen soll. Die Verstärkungsschicht hingegen soll mit der Funktionsschicht anschließend verklebt werden. Aus der Beschreibung ist zu entnehmen, dass die Verstärkungsschicht auf der Seite der Funktionsschicht möglichst vollständig mit der Funktionsschicht zu verkleben sei. Als Verstärkungsschicht soll ein offenes Gewebe oder ein Gelege eingesetzt werden können, beispielsweise auch ein extrudiertes Netz. Die Schutzschicht soll ein Vlies, ein Gewebe oder eine Mikrofaserschicht sein. Die Funktionsschicht, die mit der Schutzschicht zusammen ein Vorlaminat bilden solle, soll eine mono- oder biaxial verstreckte Folie oder eine nichtverstreckte Folie sein, kann aber auch ein Feinfaservlies sein, wobei ein Flächengewicht der Funktionsschicht vorzugsweise zwischen 15-80 g/m² und das Material der Funktionsschicht vorzugsweise aus Polypropylen, Polyethylen, Polyester, Polyamid oder Polyurethan sein soll. Ein derart hergestelltes vierschichtiges Lagenlaminat weist gemäß des Ausführungsbeispiels 5 als äußere Schutzschicht ein Polyethylen-Spinnvlies mit einem Flächengewicht von 60 g/m² auf, auf dem ein monoaxial verstreckter Film aus Polyethylen und Kreide mit einem Flächengewicht von 30 g/m² und einer Wassersäule > 1.500 mm bei einer Wasserdurchlässigkeit von 1.730 g/m² 24 h aufkaschiert werden soll. Als Verstärkungsschicht wird ein Polyethylen-Gelege mit Monofilamenten mit einem Durchmesser von 0,43 mm und einem Flächengewicht von 30 g/m² eingesetzt. Diese Verstärkungsschicht wird mit einer weiteren äußeren Schutzschicht verklebt, wobei ein Klebstoff auf Basis eines Ethylenvinylacetat-Copolymers mit 130°C Temperatur aufgesprüht wird. Die weitere äußere Schutzschicht ist ein thermokalandriertes Polyethylen-Spinnvlies mit einem Flächengewicht von 30 g/m². Das vierlagige Laminat soll wasserdampfdurchlässig mit einem Wert von 1.545 g/m² 24 h und wasserdicht mit einer Wassersäule von 1.500 mm sein. Als zusätzliche Schicht kann eine Strahlenschutzschicht vorgesehen sein, beispielsweise in Form einer Vakuumbeschichtung mit einem Metall, das auf einer Oberseite einer der Schutzschichten für die Reflektion von Infrarotstrahlung und/oder zur Abstrahlung elektromagnetischer Strahlung angeordnet sein kann.

Aufgabe der vorliegenden Erfindung ist es, ein Baumaterial mit einem Lagenmaterial zur Verfügung zu stellen, das nicht nur in Bezug auf eine Reißfestigkeit sondern insbesondere auch in Bezug auf eine Einsatzfähigkeit als Baumaterial besonders angepasst ist, wobei bei der Herstellung auf eine möglichst geringe Zahl von Bearbeitungsstationen zurückgegriffen wird.

Diese Aufgabe wird mit einem Baumaterial mit den Merkmalen des Anspruchs 1 sowie mit einem Verfahren zur Herstellung eines Laminats mit den Merkmalen des Anspruchs 20 gelöst. Weitere vorteilhafte Ausgestaltungen wie auch Verwendungen sind in den weiteren Ansprüchen dargelegt.

Es wird ein Baumaterial vorgeschlagen, welches ein Langzeit-UV-stablilsiertes Lagenmaterial in Form eines Laminats aufweist, mit einer ersten Lage, die vorzugsweise ein Vlies, insbesondere ein ein Polymer enthaltendes Vlies hat, mit einer zweiten Lage, die zumindest als Verstärkung einer dritten Lage dient, die ein zumindest filmartiges Material aufweist, und mit einer vierten Lage, die zumindest ein Polymermaterial und einen UV-Stabilisator aufweist, wobei das Lagenmaterial wasserdampfdurchlässig und wasserundurchlässig ist.

Es hat sich herausgestellt, dass viele der verwendeten Baumaterialien zwar hinsichtlich einer ausreichenden Reißfestigkeit ausgelegt sind. Eine Langzeitbeständigkeit unter Einfluss von UV-Strahlen oder Infrarotstrahlen hingegen wird nur bis zu einem bestimmten Grade berücksichtigt. Das nun vorgeschlagene Baumaterial hingegen setzt sich damit auseinander, wie eine Langzeit-UV-Stabilisierung in das Lagenmaterial eingebracht werden kann, ohne dass durch den Aufbau der Lagen eine Störung dieser Stabilisierung erfolgt. Es hat sich herausgestellt, dass unterschiedliche Herstellungsweisen einen unterschiedlichen Einfluss auf die verwendeten UV-Stabilisatoren haben. Daher hat es sich als besonders vorteilhaft erwiesen, wenn ein UV-Stabilisator in der vierten Lage angeordnet ist, da dadurch eine Stabilisierung der darüber angeordneten Lagen möglich wird. Vorzugsweise ist die vierte Lage diejenige Lage, die nach innen bei einem Bauvorhaben weist, während die erste Lage nach außen, das heißt von einem Gebäude oder einer ähnlichen Struktur weg weist. Dieses gilt insbesondere, wenn das Baumaterial als Unterspann- oder Unterdeckschalungsbahn eingesetzt wird bzw. als Wandabdeckung. Darüber hinaus ist jedoch das vorgeschlagene Baumaterial ebenfalls bei Neubauten, bei einer Sanierung, einer Umdeckung, im Dachausbau, als Wasser-, Dampf- oder Luftsperre bzw. als Fassadenbahn ein- oder mehrlagig einsetzbar. Auch können Streifen des Materials genutzt werden, um spezifische Abdeckungen, beispielsweise im Dachbereich, erzielen zu können.

Auch kann das Laminat als Klebeband genutzt werden, wenn ein Haftvermitller zusätzlich genutzt wird. Gemäß einer Ausgestaltung ist vorgesehen, dass zumindest im Wesentlichen in der vierten Lage der UV-Stabilisator Verwendung findet, während in den übrigen Lagen kein oder nur sehr wenig mit einem oder mehreren UV-Stabilisatoren UV-stabilisiertes Material zum Einsatz gelangt. Gemäß einer weiteren Ausgestaltung ist vorgesehen, dass zumindest eine der zumindest vier Lagen ebenfalls einen UV-Stabilisator mit aufweist. Eine Weiterbildung sieht vor, dass die erste Lage ein Vlies ist, was aus verschiedenen Materialien hergestellt sein kann. Neben der Verwendung von einem oder mehreren Polymermaterialien für das Vlies kann auch anderes Material zur Vliesherstellung eingesetzt werden. Auch kann die erste Lage Steinwolle oder ähnliches aufweisen. Vorzugsweise ist die erste Lage in der Lage, eine höhere Festigkeit zur Verfügung zu stellen als die nachfolgende dritte Lage. Die erste Lage ist vorzugsweise thermobondiert. Die erste Lage kann jedoch auch ein Gewebe, Gewirke oder ein sonstiges Material aufweisen, das vorzugsweise ein Einreißen des Lagenmaterials mit verhindert.

Die zweite Lage ist vorzugsweise mit einer höheren Festigkeit, insbesondere mit einer höheren Reißfestigkeit in MD- wie auch in CD-Richtung versehen gegenüber derjenigen der ersten Lage. In Bezug auf eine zur zweiten Lage benachbarten dritten Lage sieht die Größe der Reißfestigkeit wie folgt vorzugsweise aus: die zweite Lage weist die höchste Reißkraft auf, die erste Lage ist mit einer geringeren Reißkraft als die zweite Lage versehen, die dritte Lage ist mit der geringsten Reißkraft versehen. Die Reißkraft wird in MDwie auch in CD-Richtung gemäß DIN EN 13859-1 gemessen. Eine gleiche Eigenschaft ergibt sich auch für einen Widerstand gegen Weiterreißen in MD- und in CD-Richtung. Dieses wird ebenfalls gemäß DIN EN 13859-1 gemessen, als sogenannter Nagelschafttest.

Die vierte Lage ist vorzugsweise in etwa mit einer Reißfestigkeit versehen, die der der ersten Lage entspricht. Sie kann jedoch auch darüber oder darunter liegen. Vorzugsweise ist vorgesehen, dass die Reißfestigkeit der vierten Lage geringer ist als diejenige der zweiten Lage. Die vierte Lage ist vorzugsweise ebenfalls aus einem Polymermaterial hergestellt, in das der UV-Stabilisator enthalten ist. Neben einem UV-Stabilisator kann zusätzlich auch ein Flammhemmer im Material vorhanden sein. Vorzugsweise ist die vierte Lage in Spinnvlies, das thermobondiert ist. Gemäß einer Ausgestaltung ist vorgesehen, dass ein zumindest Bikomponentenvlies genutzt wird, vorzugsweise ein mit zumindest zwei voneinander unterscheidbaren Segmenten im Querschnitt ausgestatteten Vliesfaser. Vorzugsweise wird eine Kern-Mantel-Struktur eingesetzt. Als vorteilhaft hat sich erwiesen, dass eine erste Segmentstruktur eine besondere Festigkeit, insbesondere Reißfestigkeit zur Verfügung steht, während ein eher in einem Außenbereich der Vliesfaser angeordnetes Segment für eine Haftung zu einer benachbarten Lage Sorge trägt. Beispielsweise ist vorgesehen, dass eine Kern-Mantel-Struktur Verwendung findet, bei der in einem Kern Polypropylen verwendet wird, während in einem Mantel Polyethylen zur Anwendung gelangt.

Eine weitere Ausgestaltung sieht vor, dass die erste Lage ein Vlies ist, welches Polyethylen aufweist, und die dritte Lage ein mikroporöses Material ist, das füllstoffgefüllt und verstreckt ist. Vorzugsweise weist die dritte Lage ein Polyethylen auf, insbesondere ist dieses aus Polyethylen hergestellt. Eine Mikroporösität wird beispielsweise durch Verwendung von einem Füllstoff hergestellt, wobei durch ein Verstrecken des Filmmaterials eine Kontaktfläche zwischen dem Polymermaterial und dem Füllstoff aufbricht und auf diese Weise eine Mikroporösität im Filmmaterial einstellbar ist. Eine Verstreckung erfolgt vorzugsweise in CD- und MD-Richtung. Die Verstreckung kann beispielsweise mit einem Ringroll-Verfahren erfolgen. Dabei greifen zumindest zwei Kalanderwalzen so ineinander, dass eine Verstreckung aufgrund des Ineinandergreifens erfolgt. Eine andere Möglichkeit des Verstreckens erfolgt zum Beispiel durch Einsatz eines Streckrahmens. Auch besteht die Möglichkeit, dass eine Verstreckung durch unterschiedliche Geschwindigkeiten von Vorschubwaizen erzielt wird. Auch können Kombinationen derartiger Verstreckungen erfolgen. Vorteilhaft ist es, wenn das Filmmaterial verstreckt wird, wenn dieses schon mit einer Lage verbunden ist. Vorzugsweise wird die dritte Lage mit der vierten Lage zusammen verstreckt. Dadurch erhält die vierte Lage eine erhöhte Festigkeit, wenn beispielsweise dieses ein Vliesmaterial ist. Durch das Verstrecken der Vliesfasern kann eine Kristallinität erhöht werden. Vorzugsweise ist die dritte und die vierte Lage dabei miteinander thermobondiert.

Die zweite Lage ist vorzugsweise aus einem netzartigen Material, insbesondere als Netz ausgestaltet. Sie kann jedoch auch ein Gewebe oder Gewirke sein, das in der Lage ist, eine hohe Festigkeit zur Verfügung zu stellen. Beispielsweise können Fasern oder Materialien der zweiten Lage, zum Beispiel des Netzes, weitere Polymerkomponenten aufweisen. So können Kem-Mantel-Strukturen vorliegen, wobei der Mantel eine gute Thermokalandriereigenschaft und der Kern eine hohe Festigkeit zur Verfügung stellt. So kann der Kern ein HDPE und der Mantel ein LDPE aufweisen. Eine Weiterbildung sieht vor, dass ein geschlitzter Film oder ein fibrillierter Film Verwendung findet. Ein derartiges Material wird zum Beispiel unter der Bezeichnung CLAF beispielsweise von der Firma Atlanta Misseki CLAF Inc. vertrieben. Vorteil eines derartigen geschlitzten oder fibrillierten Film ist die Zurverfügungstellung einer hohen Dehnungsfestigkeit durch eine beispielsweise netzartige Struktur. Zum anderen lässt sich ein derartiges Material besonders gut und dauerfest zu benachbarten Lagen thermobondieren.

Vorzugsweise wird angestrebt, dass zumindest alle vier Lagen an ihrer Oberfläche zumindest jeweils das gleiche Polymermaterial aufweisen. Bevorzugt ist hierbei die Verwendung eines Polyethylens oder eines anderen Polymermaterials, welches eine geringere Schmelztemperatur aufweist als ein in einem Inneren eines Bikomponentenfaser-Vlieses verwendetes Polymermaterial der vierten Lage. Das Bikomponenten-Vliesmaterial mit einer Kern-Mantel-Struktur weist vorzugsweise einen Kern auf, der im Wesentlichen Polypropylen enthält, während ein Mantel zumindest im Wesentlichen Polyethylen aufweist. Eine Dicke des Kerns ist vorzugsweise in einem Bereich von etwa 80% bis 90% eines Vliesfaserdurchmessers. Beispielsweise ist vorgesehen, dass eine Manteldicke des Bikomponenten-Vliesmaterials etwa 5% bis 15% eines Vliesfaserdurchmessers beträgt. Die dritte Lage weist vorzugsweise ein Filmmaterial auf, das zumindest im Wesentlichen aus Polyethylen besteht, wobei ein Filmmaterialanteil bezogen auf das Gewicht des Filmmaterials zwischen 30 Gew-% und 50 Gew-% beträgt. Das Filmmaterial weist vorzugsweise Partikel auf, die eine Oberflächenbeschichtung zur Verhinderung einer Reaktion mit einem UV-Stabilisator hat, insbesondere mit einem UV-Stabilisator in einer anderen Lage. Beispielsweise kann das Filmmaterial vollflächig eine Oberflächenbeschichtung aufweisen. Die Oberflächenbeschichtung kann jedoch auch nur teilweise vorhanden sein. Bevorzugt wird beispielsweise bei Verwendung einer Kreide eine Beschichtung mit einem Stearin verwendet. Das Stearin verhindert, dass ein UV-Stabilisator, der in Kontakt mit der dritten Lage ist, mit dem Filmmaterial, insbesondere der Kreide, reagiert. Es hat sich herausgestellt, dass eine Langzeitbeständigkeit dadurch eingeschränkt wird, das bei Verwendung verschiedener Materialien und Lagen diese miteinander interagieren. Hierbei handelt es sich um Vorgänge, die über einen längeren Zeitraum sich auswirken. So kann beispielsweise ein in einer Lage angeordneter Füllstoff zu einer Verschlechterung einer UV-Stabilisierung in einer anderen Lage führen, da die Partikel des Filmmaterials von ihrer Oberflächenbeschaffenheit her und ihrer chemischen Eigenschaften den UV-Stabilisator schwächen. Bevorzugt ist es, wenn in der dritten Lage Partikel in dem filmartigen Material eine durchschnittliche Durchmessergröße von 1,8-2,2 µm haben. Beispielsweise kann eine Korngrößenverteilung vorgesehen werden, die gemäß SediGraph 5001 bestimmt wird. Hierbei ist vorgesehen, dass vorzugsweise 60% oder weniger der Partikelteilchen eine Durchmessergröße von weniger als 2 µm aufweisen. Vorzugsweise liegt die Korngrößenverteilung gemäß D98% in einem Bereich zwischen 9 und 10 µm, eine D50%-Verteilung in einem Bereich zwischen 1,9 und 2,1 µm. Als Partikel für das Füllstoffmaterial werden vorzugsweise Calciumcarbonat oder andere vergleichbare Materialien eingesetzt.

Die dritte Lage mit dem filmartigen Material wird hinsichtlich ihrer Wasserdampfdurchlässigkeit vorzugsweise durch eine Polymerstruktur der Matrix, durch ein Reckverhältnis, durch einen Füllstoffpartikelgehalt wie auch durch eine Füllstoffpartikelqualität eingestellt. Die Wasserdampfdurchlässigkeit gemäß ASTM E96 D gemessen bei 23°C und einer Luftfeuchtigkeit von 80% liegt vorzugsweise in einem Bandbereich von 1.500 bis 20.000 g/m² 24 h.

Eine weitere Verbesserung hinsichtlich einer UV-Stabilisierung ergibt sich dadurch, wenn ein Mehrkomponenten-Vliesmaterial in der vierten Lage Verwendung findet, insbesondere in Form von Vliesfasern, bei denen in einem Segment, insbesondere einem Kern, verschiedene Polymermaterialien eingesetzt sind. So wird gemäß einer Weiterbildung ein erstes Polymermaterial in Form eines Polyethylen, ein zweites Polymermaterial in Form eines ersten Homopolypropylen und ein drittes Polymermaterial in Form eines zweiten Homopolypropylen im Kern eingesetzt. Beispielsweise ist vorgesehen, dass das zweite Polymermaterial einen größeren Gewichtsanteil im Segment aufweist als ein addierter Gewichtsanteil aus erstem und dritten Polymermaterial. Weiterhin ist es bevorzugt, wenn zumindest das Segment, vorzugsweise der Kern, einen UV-Stabilisator, vorzugsweise einen Flammhemmer, aufweist, wobei es besonders bevorzugt ist, wenn das Segment einen UV-Stabilisator und einen Flammhemmer aufweist.

Gemäß einer Weiterbildung ist vorgesehen, dass die zweite Lage ein Polyethylen hoher Dichte aufweist. Hierbei liegt die Dichte zwischen 0,94 g/m³ und 0,97 g/m³. Das Polyethylen ist vorzugsweise netzartig angeordnet, wobei die zweite Lage vorzugsweise ausschließlich aus einem netzähnlichen Material besteht. Dieses netzartige Material kann beispielsweise ein Netz sein oder aber gemäß einer bevorzugten Ausgestaltung ein oben erwähntes CLAF-Material.

Bei einer Verwendung von insbesondere gleichen Polymermaterialien zumindest teilweise als Außenmaterial einer jeweiligen Lage hat es sich bei der Herstellung als vorteilhaft erwiesen, dass dadurch das gesamte Laminat miteinander thermobondierbar ist. Auf diese Weise kann auf Klebematerialien, Klebefasern, auf eine Vernadelung, ein Ultraschailverbinden oder eine sonstige Verbindungstechnik verzichtet werden. Durch einen entsprechend temperierten Thermobondierkalander besteht dann die Möglichkeit, dass aufgrund des in einem vorzugsweise sehr engen Temperaturbereich hinsichtlich der Schmelztemperatur im Außenbereich vorliegenden Polymermaterials die Thermonbondierung zu einer ausreichenden Festigkeit zwischen den Lagen führt. Vorzugsweise ist ein Polymermaterial im Außenbereich angeordnet, dessen Schmelztemperaturen jeweils voneinander nicht mehr als 10°C, vorzugsweise nicht mehr als 8°C, voneinander abweichen.

Eine weitere Erhöhung der UV-Stabilisierung ergibt sich dadurch, dass ein Titandioxidanteil in einem Polymer erhöht wird. Beispielsweise kann hierzu vorgesehen werden, dass ein Titandioxidanteil von mehr als 5 Gew.-% einer Vliesfaser vorgesehen ist. Vorzugsweise weist die erste Lage eine Vliesfaser mit einem derartigen Anteil an Titandioxid auf. Eine weitere Erhöhung einer UV-Stabilisierung ergibt sich bei Verwendung eines Reflektionsmittels in zumindest einer der Lagen des Laminats. Hierzu kann beispielsweise eine Metallbedampfung, eine Metallbeschichtung und/oder eine Metallschicht vorgesehen sein, insbesondere in Form einer Folie, die in das Laminat mit eingearbeitet wird. Eine weitere Ausgestaltung sieht vor, dass Metallpartikel zumindest an einer Oberfläche vorgesehen sind, die eine stark reflektierende Eigenschaft aufweisen. Eine zusätzliche Erhöhung einer UV-Stabilisierung ergibt sich bei Verwendung von Russpartikeln insbesondere in Verbindung mit Polyethylen. Durch die Rußpartikel im Polyethylenmaterial selbst wird das Polyethylen geringer anfällig gegenüber UV-Strahlen.

Gemäß einem weiteren Gedanken der Erfindung wird ein Verfahren zur Herstellung eines Laminats mit den Merkmalen eines der vorhergehenden Beispielen vorgestellt, bei dem zuerst ein, einen UV-Stabilisator enthaltendes zumindest Bikomponenten-Vliesmaterial mit einem Polyethylen aufweisenden Film laminiert wird, bevor eine Verstärkungslage und ein weiteres Vlies aufthermobondiert werden.

Die Verstärkungslage ist vorzugsweise die oben beschriebene zweite Lage. Vorzugsweise sind alle Lagen Polyethylen enthaltend, zumindest teilweise aus Polyethylen bestehend, wobei eine Thermobondierung sich die niedrige Schmelztemperatur von Polyethylen gegenüber Polypropylen zu Nutze macht. Eine Verbindung und Haftung zwischen den einzelnen Lagen erfolgt vorzugsweise ausschließlich, zumindest aber zum überwiegenden Teil aufgrund einer Anhaftung bzw. Verschmelzung von Polyethylen verschiedener benachbarter Lagen miteinander. Der Film ist vorzugsweise mikroporös eingestellt und gereckt. Die Mikroporösität ist insbesondere derart eingestellt, dass das Laminat eine Wassersäule von mindestens 3 Metern bei Beibehaltung einer Wasserdampfdurchlässigkeit erhält. Die Füllstofffüllung des Films erfolgt vorzugsweise während der Aufbereitung des Filmmaterials im Extruder. Ein derart Füllstoff gefülltes Polymermaterial wird anschließend auf das Bikomponenten-Vliesmaterial aufextrudiert und zur Erzielung einer Mikroporösität im CD- und im MD-Richtung verstreckt. Vorzugsweise wird ein heißes thermoplastisches Füllstoff gefülltes Polyethylen verwendet, dass aus einem Schlitzextruder einem vorgefertigten Bikomponenten-Vliesmaterial zugeführt wird.

Gemäß einer Weiterbildung ist vorgesehen, dass das Bikomponenten-Vliesmaterial inline hergestellt wird, so dass eine entsprechende Spinnvorrichtung dem Filmextruder vorgelagert angeordnet ist. Im Mantel des Bikomponenten-Vliesmaterials wird ein Polyethylen und im Kern ein erstes und ein zweites Homopolypropylen mit einem Polyethylen und einem UV-Stabilisator verwendet. So hat sich beispielsweise als vorteilhaft herausgestellt, dass in dem Kernmaterial ein unter der Bezeichnung "HL 504 FB" erhältliches Homopolypropylen Verwendung findet. Vorzugsweise wird dieses Homopolypropylen mit einem Gewichtsanteil von 10 bis 20 Gew.-% im Kern verwendet. Alternativ zu diesem Homopolypropylen kann auch ein anderes Homopolypropylen Verwendung finden, welches einen MFR in einem Bereich von 320 bis 580 g/10min (230°C/2,16 kg) gemäß ISO 1133 aufweist. Ein weiteres Homopolypropylen, das im Kern Verwendung findet, kann beispielsweise ein unter der Bezeichnung "HF 420 FB" von Borealis erhältliches Homopolypropylen sein. Vorzugsweise wird dieses oder ein alternativ anderes Homopolypropylen verwendet, dessen MFR vorzugsweise in einem Bereich von 15 und 25 g/10 min (230°C/2,16 kg) gemäß ISO 1133 beträgt. Im Kern wird des Weiteren vorzugsweise ein Polyethylen mit verwendet, dessen MFR in einem Bereich zwischen 14 und 22 g/10 min (190°C/2,16 kg) gemäß ISO 1133 liegt. Vorzugsweise wird hierfür ein HDPE eingesetzt, dessen Dichte größer 0,945 g/cm³ gemäß ASTM D 792 ist. In den Kern wird des Weiteren ein UV-Stabilisierer gemischt. Vorzugsweise wird hierbei ein Gewichtsanteil von zumindest 1 Gew.-% bis 5 Gew.-% UV-Stabilisierer zugegeben. Bevorzugt wird ein UV-Stabilisator mit der CAS-Nr. 193098-40-7 und/oder 067845-93-6 verwendet. Beispielsweise kann als UV-Stabilisierer ein UV-Absorber, ein HALS-Stabilisator und/oder ein so genannter Quencher ausgenutzt werden. Ein UV-Absorber filtert das ultraviolette Wellenspektrum aus dem Licht. Dabei wird die Energie des zu absorbierenden Lichts in Wärme umgewandelt. Eine Stärke einer UV-Absorption hängt von einer Wirkstoffkonzentration und einer Wandstärke des Endprodukts ab. Als UV-Absorber können Benzophene, Triazole wie auch Trazine eingesetzt werden. Als HALS-Stabilisatoren (hindered amine-light-stabilisator) werden solche Additive eingesetzt, die eine Reaktion aggressiver Photooxidationsprodukte, insbesondere von Radikalen und Peroxiden unterbinden. Durch Einstellung einer Wirkstoffkonzentration kann eine Produkt-Lebensdauer des Laminats eingestellt werden. HALS-Stabilisatoren können beispielsweise polymere HALS, oligomere HALS, NOR-HALS und/oder substituierte HALS sein. Ein Quencher deaktiviert Radikale und leitet Energie letztlich in Form von Wärme ab. Beispielsweise ist es bekannt, dass Nickel als ein derartiger Quencher einsetzbar ist. Neben diesen UV-Stabilisatoren kann vorzugsweise zusätzlich eine Ausrüstung mit Thermostabilisatoren erfolgen. Thermostabilisatoren sind vorzugsweise Antioxidantien, die das verwendete Polymer, insbesondere Polyethylen bzw. Polypropylen wie aber auch den UV-Stabilisator schon bei der Verarbeitung schützen können. Vorzugsweise sind die Thermostabilisatoren wie auch die UV-Stabilisatoren in Form eines Masterbatches dem Polymer beigefügt. Als Thermostabilisatoren sind beispielsweise Phenole oder Phosphite eingesetzt.

Weiterhin wird im Umfang der Offenbarung auf UV-Stabilisatoren verwiesen, wie sie aus der US 6,100,208 hervorgehen, ebenso auf die dortigen Polymermischungen mit darauf abgestimmten UV-Stabilisatoren und jeweiligen Gewichten und Pigmenten für Vliesfasern. Diese Offenbarung wird in diese Beschreibung mit aufgenommen.

Im Falle eines Bikomponenten-Vlieses wird vorzugsweise das erste Homopolypropylen mit einem Gewichtsanteil von 88 Gew.-% bis 75 Gew.-%, vorzugsweise in einem Bereich von 81 Gew.-% bis 84 Gew.-%, das zweite Homopolypropylen in einem Gewichtsanteil von 10 bis 18 Gew.-% vorzugsweise 16 bis 15 Gew.-% und das Polyethylen mit einem Gewichtsanteil von etwa 1 bis 3 Gew.-% sowie einem UV-Stabilisator mit einem Gewichtsanteil von 1 bis 5 Gew.-% und einem flammhemmenden Additiv mit einem Gewichtsanteil von vorzugsweise 2 bis 6 Gew.-% im Kern verwendet. Vorzugsweise wird beim Laminat ein Flammhemmer so eingesetzt, dass die Klassifizierung F gemäß EN 13859-1 erreicht wird. Zusätzlich können noch Additive, insbesondere Pigmente beigefügt werden. Auch besteht die Möglichkeit, dass Titandioxid im Kern und/oder im Mantel des Bikomponenten-Vlieses vorliegt. Ein Mantel weist vorzugsweise ein Polyethylenmaterial auf. Vorzugsweise wird eine Polyethylen verwendet, welches einen MFR von 15 bis 20 g/1 min aufweist. Vorzugsweise ist der Mantel vollständig aus einem derartigen Homopolyethylen bestehend. Beispielsweise kann ein Polymermaterial wie das von der Firma Dow kommerziell erhältliche ASPUN 6834 eingesetzt werden. Das erste Homopolypropylen weist vorzugsweise einen MFR von 15 bis 25 g/10 min. (230°C/2,16 kg) auf. Das zweite Homopolypropylen weist vorzugsweise einen MFR von 320 bis 580 g/10 min. (230°C/2,16 kg) auf. Das Polyethylen weist vorzugsweise einen MFR zwischen 14 und 22 g/10 min. (190°C/2,16 kg) auf.

Das Material der zweiten Lage ist vorzugsweise ebenfalls zumindest teilweise, vorzugsweise vollständig ein Polyethylenmaterial. Gemäß einer Ausgestaltung wird hierzu ein fibrillierter Film aus Polyethylenmaterial genutzt. Dieses weist vorzugsweise ein Basisgewicht zwischen 20 und 30 g/m² auf. Vorzugsweise weist die zweite Lage eine Elongierung in MD- und in CD-Richtung auf, die zwischen 18 und 25 Prozent liegt, gemessen nach ASTM D 5034. Eine Zugkraft (grab tensile) gemessen gemäß ASTM D 5034 weist vorzugsweise einen Wert zwischen 85 N und 140 N auf. Eine Zugfestigkeit in CD- und in MD-Richtung beträgt vorzugsweise zwischen 130 und 180 N/5 cm gemäß ASTM D 882.

Eine Zugfestigkeit in Bezug auf eine trapezoide Kraft beträgt vorzugsweise in MD-Richtung zwischen 21 und 40 N und in CD-Richtung zwischen 35 und 65 N, gemessen gemäß ASTM D 1117.

Das Laminat einsetzbar als Baumaterial weist gemäß einer beispielhaften Ausgestaltung ein Polyethylen-Spinnvlies mit einem Basisgewicht zwischen 45 und 60 g/m² als erste Lage auf. insgesamt weist das Laminat ein Flächengewicht vorzugsweise zwischen 125 und 145 g/m² gemessen nach DIN EN 13859-1 mit einer Reißkraft in MD-Richtung von zumindest 180, insbesondere 200 N/5 cm und in CD-Richtung von zumindest 100, vorzugsweise 120 N/5 cm gemessen gemäß DIN EN 13859-1 auf. Eine Bruchdehnung in MD-Richtung beträgt vorzugsweise zumindest 30%, insbesondere zumindest 35 %, in CD-Richtung zumindest 15%, insbesondere zumindest 18%, gemessen gemäß DIN EN 13859-1. Das Laminat ist vorzugsweise wasserdicht gemäß der Klasse W1, gemessen gemäß DIN EN 13859-1 bei 2 Stunden und 200 mm. Vorzugsweise beträgt ein s_{d}-Wert eine Größe, die etwa 0,04 m gemessen bei 23°C / 50%-0% nach EN ISO 12572 und Klima C gemessen worden ist. Ein Widerstand gegen Weiterreißen an beispielsweise dem Nagelschaft wird gemäß DIN EN 13859 gemessen und ein Wert beträgt hierbei zumindest 140 N in MD-Richtung und zumindest 180 N in CD-Richtung.

Weitere vorteilhafte Ausgestaltungen und Weiterbildungen werden anhand der nachfolgenden Zeichnungen näher erläutert. Die dort dargestellten Merkmale sind jedoch nicht auf die einzelnen Ausführungsgestaltungen beschränkt. Vielmehr können diese wie auch andere Merkmale zusammen mit denjenigen aus anderen Figuren bzw. aus der obigen Beschreibung zu Weiterbildungen zusammengesetzt werden. Auch sind die Figuren nicht beschränkend auszulegen.

Es zeigen:
- Fig. 1:: eine schematische Darstellung eines Baumaterials mit einem Lagenmaterial eines Laminats mit vier Lagen in schematischer Darstellung,
- Fig. 2:: eine Vergrößerung eines im Laminat eingesetzten mikroporösen Films als dritte Lage,
- Fig. 3:: eine erste Produktionseinheit zur Herstellung eines Bikomponenten-Spinnvlieses, auf das ein Film aufextrudiert wird, als Vorprodukt,
- Fig. 4:: eine nachfolgende Bearbeitungseinheit zum Aufbringen weiterer Lagen auf das Vorprodukt und anschließendes Thermokalandrieren und Erzeugen des später zu verwendenden Laminats, und

- Fig. 5:: eine Gegenüberstellung verschiedener Laminate und deren Aussetzung gegenüber einer UV-Strahlung, aufgetragen als Zeitspanne auf der x-Achse und dem Nachlassen einer Dehnungseigenschaft.

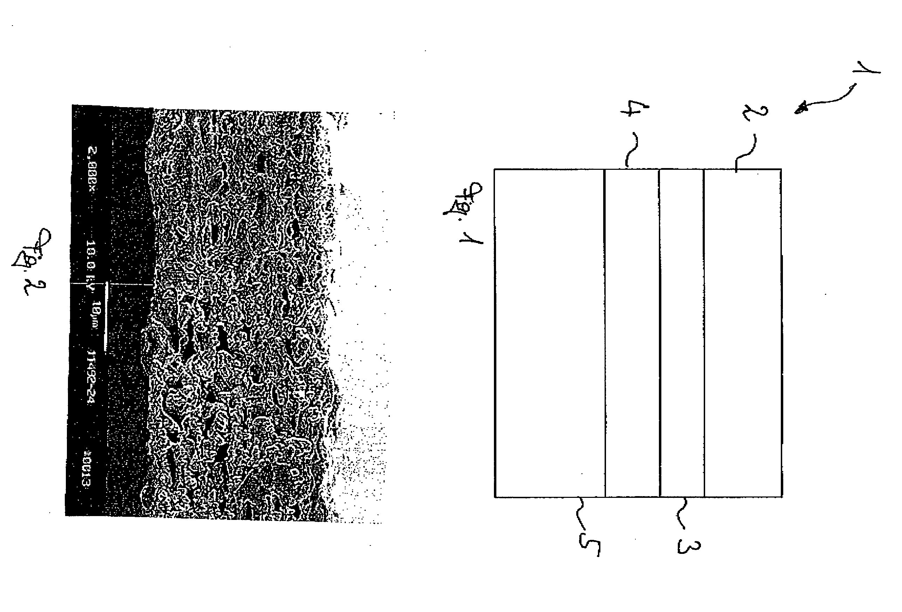

Fig. 1 zeigt in beispielhafter schematischer Ansicht ein bevorzugtes Lagenmaterial in Form eines Laminats 1, das thermobondiert als Baumaterial anzuwenden ist. Eine erste Lage 2 ist ein Vlies, insbesondere ein Spinnvlies aus Polyethylen. Eine dazu benachbarte zweite Lage 3 weist vorzugsweise ein HDPE-Material auf, insbesondere in Form eines CLAF-Materials. Bevorzugt wird als zweite Lage ein geschlitzter Film wie zum Beispiel das CLAF-Material genutzt. Die daran angeschlossene dritte Lage 4 ist ein Polyethylenfilmmaterial, in dem Füllmaterial eingelassen ist. Der Film ist verstreckt, wodurch er mikroporös geworden ist. Als Füllmaterial können insbesondere Weißpigmente genutzt werden. Neben Titandioxid, Bariumsulfat, Calciumcarbonat, Kaolin, ist auch die Verwendung von Silziumdioxid möglich. Bevorzugt wird die Verwendung von Kreide. Der Kreideanteil liegt vorzugsweise zwischen 30 bis 50 Gew.-% bezogen auf das Filmgewicht. Daran anschließend ist eine vierte Lage 5, die ein Bikomponenten-Spinnvlies mit einer Kern-Mantel-Struktur ist. Im Kern ist Polypropylen angeordnet, im Mantel Polyethylen. Das Laminat 1 ist thermobondiert. Vorzugsweise sind alle Lagen untereinander ausschließlich durch Thermobondierung verbunden.

Fig. 2 zeigt eine vergrößerte Darstellung des in der dritten Lage 4 verwendeten mikroporösen Films, Wie aus der vergrößerten Darstellung hervorgeht, ist der Film so gestreckt, dass sich Mikroporösitäten durch den Film hindurch erstrecken. Dadurch bleibt der Film zwar wasserundurchlässig, erhält andererseits aber eine Dampfdurchlässigkeit. Durch die Größe der Verstreckung kann die Wasserdampfdurchlässigkeit gezielt eingestellt werden.

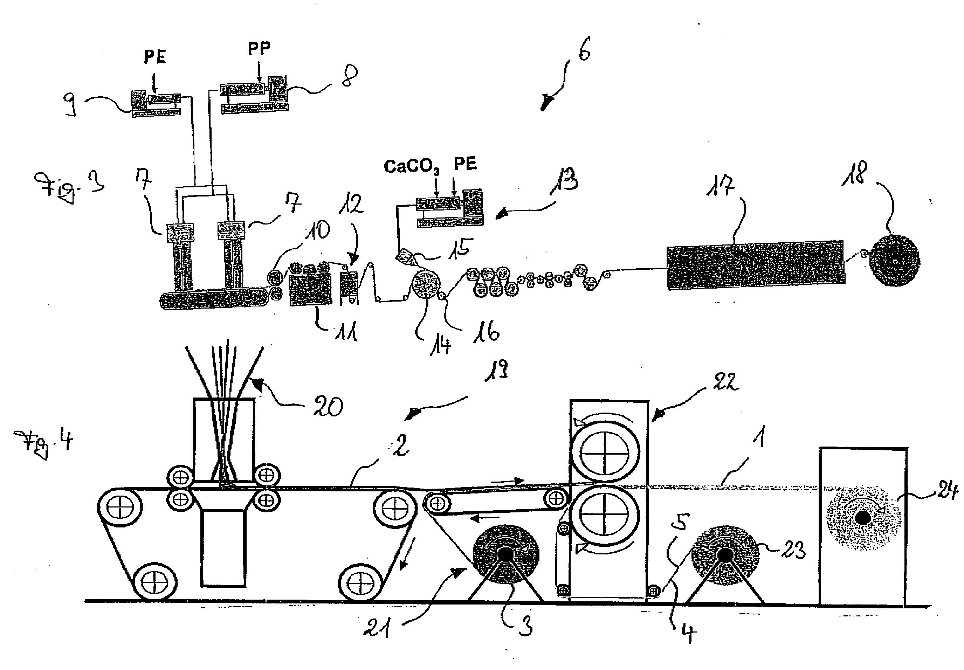

Fig. 3 zeigt in einer beispielhaften schematische Darstellung eine erste Herstellungslinie 6. Es wird über zwei Spinnbalken 7 ein Bikomponenten-Spinnvlies aufweisend Polypropylen und Polyethylen hergestellt. Hierzu sind ein erster Extruder 8 und ein zweiter Extruder 9 vorgesehen. Der erste Extruder 8 ist vorzugsweise größer dimensioniert als der zweite Extruder 9. Neben einer Zwei-Spinnbalken-Anlage kann auch eine Ein-Spinnbalken-Anlage Verwendung finden, bei der eine entsprechende Bikomponentenverteilung in Segmenten erlaubt ist. Im Anschluss an die Spinnvliesvorrichtung wird das Vlies durch verschiedene Walzenvorrichtungen geführt und dabei unter Spannung gehalten. Hierbei kann beispielsweise eine Heißkalandrierung mittels eines Walzenkalanders 10 erfolgen. Eine Reckung des Vlieses kann beispielsweise in einer nachfolgenden Reckeinheit 11 erfolgen. In einer sich anschließenden Beschichtungsvorrichtung 12 wird beispielsweise eine hydrophobe, hydrophile oder sonstige Beschichtung aufgetragen. Die Anzahl von verschiedenen Bearbeitungsstationen kann in der dargestellten Reihenfolge, aber auch in anderer Reihenfolge bzw. mit anderen Bearbeitungsstationen vorliegen. Beispielsweise kann anstelle eines Walzenkalanders zur Thermokalandrierung eine Ultraschallverschweißung, eine Vernadelung, ein Klebeverfahren oder eine sonstige Bindetechnik eingesetzt werden. Durch Umlenkrollen vor einer Filmextrusionseinheit kann das so gebildete Spinnvlies auf eine vorgebbare Spannung eingestellt werden. Eine Filmextrusionseinheit 13 weist beispielsweise eine Trommel 14 auf. Über eine Schlitzdüse 15 erfolgt ein vollflächiger Auftrag des noch formungsfähigen aufextrudierten Polymermaterials. Dieses ist vorzugsweise ein Polyethylen, dem Kreide beigefügt worden ist. Vorzugsweise wird im Extruder selbst eine entsprechende Mischung von Polyethylen und Kreide soweit eingestellt, dass das an der Schlitzdüse 15 austretende heiße Polymermaterial eine gleichmäßige Beschichtung der zugeführten Spinnvliesschicht ergibt. Eine Anhaftung des heißen Polymermaterials kann beispielsweise durch eine Andruckrolle 16 und/oder durch eine entsprechende elektrostatische Aufladung unterstützt werden, die beispielsweise unterhalb der Schlitzdüse 15 so angeordnet ist, dass eine innige Verbindung zwischen dem Filmmaterial und dem Spinnvlies erfolgt. Im Anschluss wird beispielsweise eine Wärmestrecke vorgesehen, entlang der eine Verstreckung des so gebildeten Laminats erfolgen kann. Beispielsweise kann hierbei eine Verstreckung um den Faktor 1,3 bis 2,4 erreicht werden. Eine Durchlaufgeschwindigkeit kann in einem Bereich von 20 m/min bis zu 80 m/min liegen. Auch kann durch unterschiedliche Geschwindigkeiten der jeweiligen Walzen eine Verstreckung in MD-Richtung erfolgen. Anschließend wird beispielsweise ein Streckrahmen 17 vorgesehen. Mittels diesem wird eine Breitenreckung, d.h. eine Reckung in CD-Richtung, ausgeführt. Im Anschluss daran wird das so gebildete Zweilagenlaminat auf einem Aufwickler 18 aufgewickelt.

Fig. 4 zeigt eine zweite Herstellungslinie 19. Diese ist beispielsweise getrennt von der ersten Herstellungslinie 6 aus Fig. 3 angeordnet. Auf diese Weise kann das zu fertigende vierlagige Laminat in Zwischenschritten hergestellt werden. Dieses erlaubt, dass bei einer fehlerhaften Fertigung nur ein Teil der Lagen betroffen ist. Zum anderen ermöglicht dieses eine Anpassung der Produktion an die jeweiligen Gegebenheiten, da die vorhandenen Anlagen Zwischenprodukte fertigen können, die nicht ausschließlich als Lagenmaterial für das Baumaterial zu nutzen sind, sondern auch für andere Anwendungsgebiete einsetzbar sind. Die zweite Herstellungslinie 19 weist beispielsweise eine Spinnvliesvorrichtung 20 auf. Mittels dieser wird beispielsweise die spätere erste Lage 2 hergestellt, die vorzugsweise ein Polyethylenvlies ist. Von einer Abwickeleinheit 21 kann die zweite Lage 3, die vorgefertigt ist, zugeführt werden. Die erste Lage 2 und zweite Lage 3 werden sodann zu einer Heißkalandereinheit 22 zugeführt. Von einem weiteren Abwickler 23 wird das vorbondierte Vorlaminat aus dritter Lage 4 und vierter Lage 5 ebenfalls der Heißkalandereinheit 22 zugeführt. Dort werden sodann alle vier Lagen 2, 3, 4 und 5 gemeinsam thermobondiert. Hierzu kann die Heißkalandereinheit 22 beispielsweise unterschiedliche Prägungen nutzen, wobei zumindest eine der Kalanderwalzen beispielsweise eine Glattwalze ist, während die andere eine Gravurwalze ist. Bevorzugt ist es, wenn beide Walzen temperiert werden. Gemäß einer Ausgestaltung ist vorgesehen, dass beide Kalanderwalzen in etwa auf gleiche Temperatur gebracht werden. Eine Weiterbildung sieht vor, dass eine Glattwalze eine etwas niedrigere Temperatur aufweist als eine Gravurwalze. Beispielsweise weist eine Glattwalze eine um etwa 3°C bis 8°C niedrigere Temperatur auf als eine Gravurwalze. Vorzugsweise wird bei einer Thermokalandrierung eine Oberfläche der Gravurwalze in einem Temperaturbereich von etwa 120°C bis 132°C, insbesondere in einem Temperaturbereich von 124°C bis 127°C, eingestellt, sofern zumindest die vier Lagen 2,3, 4 und 5 zumindest Polyethylen aufweisen, vorzugsweise das Laminat zumindest an der Oberfläche, die miteinander verbunden werden soll, Polyethylen hat. Gemäß einer weiteren Ausgestaltung wird ein Liniendruck in dem Kalander in einem Bereich zwischen 35 und 60 daN/cm eingestellt. Eine Vorschubgeschwindigkeit liegt beispielsweise in einem Bereich zwischen 15 m/min und 30 m/min. Als vorteilhaft hat es sich erwiesen, wenn das vierlagige Laminat 1 unter Spannung von der Heißkalandriereinheit 22 durch eine Aufwickeleinheit 24 aufgewickelt wird. Vorzugsweise wird hierzu eine Spannung von zumindest 100 N auf das Laminat in MD-Richtung aufgeprägt. Dieses ermöglicht ein festes Aufwickeln des Laminats 1, so dass sich bei einem späteren Abwickeln keine Probleme ergeben. Die aufgerollte Laminatrolle kann beispielsweise geschnitten werden, sofern das Laminat 1 mit einer Breite hergestellt wird, die beispielsweise von einer Sparrenbreite eines Holzdachstuhls abweicht. Weist beispielsweise die Sparrenbreite ein Maß von 1,50 m auf, wird vorzugsweise aus einer Rolle zumindest eine zweigeteilte Rolle mit zumindest jeweils 1,50 m Breite hergestellt.

Neben den aus Fig. 2 und Fig. 3 hervorgehenden Vor- bzw. Zwischenprodukten können auch andere Vorprodukte, zum Beispiel dreilagige Vorprodukte hergestellt werden, aus diesen das Laminat sodann hergestellt wird. Vorprodukte gehen beispielsweise aus der DE 10 2005 048 442 wie auch der DE 10 2005 048 443 hervor, auf die im Rahmen dieser Offenbarung diesbezüglich verwiesen wird.

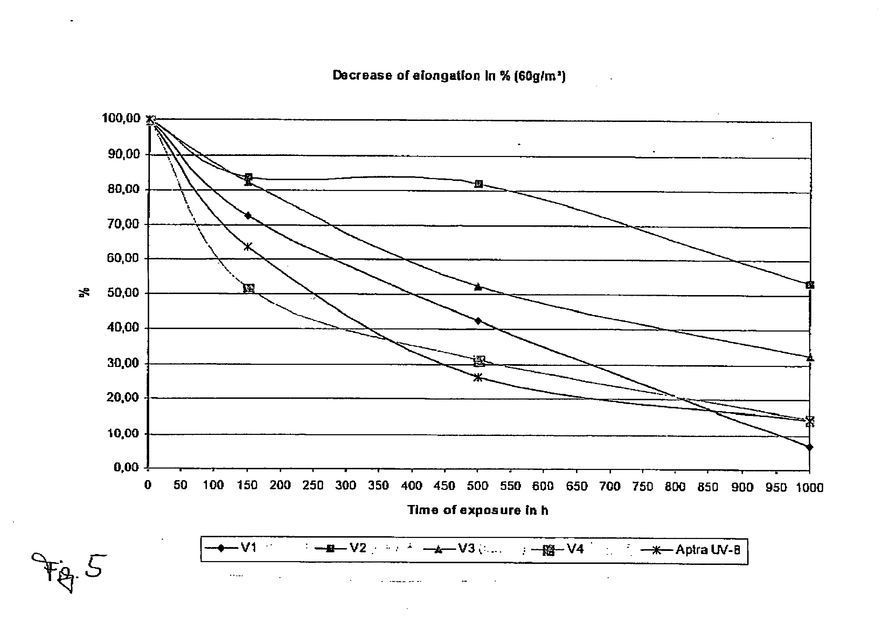

Fig. 5 zeigt einen Vergleich verschiedener Laminate V1, V2, V3, V4 und Aptra. Diese unterschiedlichen Laminate sind hinsichtlich ihrer Eigenschaften, insbesondere ihrer Dehnungseigenschaften unter Berücksichtigung der Einwirkung von UV-Strahlung untersucht worden. Dieser Test stellt darauf ab, dass im Laufe der Lebensdauerzeit eines Laminats eine gewisse Mindestmenge an UV-Strahlung zu absorbieren ist. Das Material muss somit in Bezug auf seine Eigenschaften stabil bleiben. Die Testbedingungen sind gemäß EN 13859-1 ausgeführt worden. Dabei ist vorgesehen, das Material 336 Stunden UV-A-Licht auszusetzen. Auch muss das Material einer Wärme von 70°C über 90 Tage ausgesetzt werden. Das erfindungsgemäße Material V2 weist zwar zu Beginn ebenfalls ein Abfallen der Dehnungseigenschaften auf. Dieser Abfall von etwa 16% stabilisiert sich sodann jedoch für einen Zeitraum auf einem stabilen Niveau. Erst bei Überschreiten einer Zeitdauer beginnt ein langsames Abnehmen der Dehnungseigenschaften. Das Niveau der Dehnungseigenschaften des Materials V2 ist jedoch weit oberhalb derjenigen anderen Materialien, die ebenfalls im Baumaterialsektor als Vergleichsmaterialien getestet wurden. So ist bei einer Standzeit von 1.000 Stunden das Material V2 noch in der Lage, mehr als 50% Dehnung zur Verfügung stellen zu können. Die anderen Materialien nähern sich bzw. haben die Ein-Drittel-Grenze schon weit überschritten. Daran zeigt sich, dass die Stabilisierung des Laminats durch einerseits Verwendung von Polyethylen und andererseits besondere Stabilisierung des verwendeten Polypropylens durch spezielle Nutzung einer UV-Stabilsierung dort die überraschend guten Ergebnisse eines Langzeit-UV-stabilisierten Materials im Baubereich erzielen kann. Vorzugsweise ist das vorgeschlagene Laminat so wie das hier geprüfte Laminat V2 flammgeschützt gemäß Klassifizierung E nach EN 13859-1.

Das Laminat wird vorzugsweise im Bereich von Dichtungsbahnen, Dampfbremsen, bei Estrichtrennlagen, bei Dichtungsbelägen, vor allem im Bereich von Bodenbelägen, als Dämmstoff, als Fassadenverkleidung, im Bereich von technischen Ausbauten oder in sonstigen, mit Baumaterial einsetzbaren Anwendungen genutzt. Darüber hinaus besteht die Möglichkeit, das Laminat auch bei Innenraumverkleidungen, als Schutzhülle, im Beleuchtungssektor, im Laden- und Regalbau, bei Werbeartikeln, als Kaschiermedium, bei Gewächshäusern, Überdachungen, Außenverkleidungen, Abdeckungen, Schatten spendenden Anwendungen oder auch bei Elektroanwendungen einsetzen zu können.

## Patentansprüche

1. Baumaterial aufweisend ein Langzeit-UV-stabilisiertes Lagenmaterial in Form eines Laminats (1), mit einer ersten Lage (2), die vorzugsweise ein Vlies, insbesondere ein ein Polymer enthaltendes Vlies hat, mit einer zweiten Lage (3), die zumindest als Verstärkung einer dritten Lage (4) dient, die ein zumindest filmartiges Material aufweist, und mit einer vierten Lage (5), die zumindest ein Polymermaterial und einen UV-Stabilisator aufweist, wobei das Lagenmaterial wasserdampfdurchlässig und wasserundurchlässig ist.

2. Baumaterial nach Anspruch 1, **dadurch gekennzeichnet, dass** die erste Lage (2) ein Vlies ist, welches Polyethylen aufweist, und die dritte Lage (4) ein mikroporöses Filmmaterial ist, das füllstoffgefüllt und verstreckt ist.

3. Baumaterial nach Anspruch 1 oder 2, **dadurch gekennzeichnet, dass** die zweite Lage (3) ein geschlitzter oder fibrillierter Film ist.

4. Baumaterial nach Anspruch 1, 2 oder 3, **dadurch gekennzeichnet, dass** die vierte Lage (5) ein zumindest Bikomponenten-Vliesmaterial aufweist.

5. Baumaterial nach Anspruch 4, **dadurch gekennzeichnet, dass** das Bikomponenten-Vliesmaterial mit einer Segmentstruktur versehen ist, welche die beiden Komponenten voneinander trennt.

6. Baumaterial nach einem der vorhergehenden Ansprüche 4 oder 5, **dadurch gekennzeichnet, dass** das Bikomponenten-Viiesmaterial eine Kern-Mantel-Struktur aufweist, wobei der Kern im wesentlichen Polypropylen enthält, der Mantel im wesentlichen Polyethylen und eine Dicke des Kerns in einem Bereich von etwa 80% bis 90% eines Vliesfaserdurchmessers liegt.

7. Baumaterial nach einem der vorhergehenden Ansprüche 4, 5 oder 6, **dadurch gekennzeichnet, dass** eine Mantefdicke des Bikomponenten-Vliesmaterials etwa 5% bis 15% eines Vliesfaserdurchmessers beträgt.

8. Baumaterial nach einem der vorhergehenden Ansprüche, **dadurch gekennzeichnet, dass** die dritte Lage (4) ein Filmmaterial aufweist, das zumindest im wesentlichen aus Polyethylen besteht, wobei ein Füllmaterialanteil bezogen auf das Gewicht des Filmmaterials zwischen 30 Gew.-% und 50 Gew.-% beträgt.

9. Baumaterial nach Anspruch 8, **dadurch gekennzeichnet, dass** das Füllmaterial Partikel aufweist, die ein Oberflächenbeschichtung zur Verhinderung einer Reaktion mit einem UV-Stabilisator hat, insbesondere mit einem UV-Stabilisator in einer anderen Lage.

10. Baumaterial nach einem der vorhergehenden Ansprüche, **dadurch gekennzeichnet, dass** in der dritten Lage (4) vorhandene Partikel in dem filmartigen Material eine durchschnittliche Durchmessergröße von 1,8 bis 2,2 µm haben.

11. Baumaterial nach einem der vorhergehenden Ansprüche, **dadurch gekennzeichnet, dass** ein Mehrkomponenten-Vliesmaterial der vierten Lage (5) Vliesfasern aufweist, bei denen in einem Segment, insbesondere einem Kern verschiedene Polymermaterialien eingesetzt sind, wobei ein erstes Polymermaterial ein Polyethylen, ein zweites Polymermaterial ein erstes Homopolypropylen und ein drittes Polymermaterial ein zweites Homopolypropylen ist.

12. Baumaterial nach Anspruch 11, **dadurch gekennzeichnet, dass** das zweite Polymermaterial ein größeren Gewichtsanteil im Segment aufweist als ein addierter Gewichtsanteil aus erstem und drittem Polymermaterial.

13. Baumaterial nach Anspruch 11 oder 12, **dadurch gekennzeichnet, dass** zumindest das Segment einen UV-Stabilisator und vorzugsweise einen Flammhemmer aufweist.

14. Baumaterial nach Anspruch 11 oder 12, **dadurch gekennzeichnet, dass** nur das Segment, insbesondere ein Kern einen UV-Stabilisator und vorzugsweise einen Flammhemmer aufweist, die anderen Lagen jedoch keinen UV-Stabilisator aufweisen.

15. Baumaterial nach einem der vorhergehenden Ansprüche, **dadurch gekennzeichnet, dass** die zweite Lage (3) eine Polyethylen hoher Dichte aufweist.

16. Baumaterial nach einem der vorhergehenden Ansprüche, **dadurch gekennzeichnet, dass** die zweite Lage (3) zumindest netzähnlich ist.

17. Baumaterial nach einem der vorhergehenden Ansprüche, **dadurch gekennzeichnet, dass** das Laminat thermobondiert ist.

18. Baumaterial nach einem der vorhergehenden Ansprüche, **dadurch gekennzeichnet, dass** die erste Lage (2) einen Anteil an TiO2 von mehr als 5 Gew.-% aufweist.

19. Baumaterial nach einem der vorhergehenden Ansprüche, **dadurch gekennzeichnet, dass** zumindest eine der Lagen des Laminats ein Reflektionsmittel aufweist.

20. Verfahren zur Herstellung eines Laminats mit den Merkmalen eines der vorhergehenden Ansprüche, **dadurch gekennzeichnet, dass** zuerst ein, einen UV-Stabilisator enthaltendes zumindest Bikomponenten-Vliesmaterial mit einem Polyethylen aufweisenden Film laminiert wird, bevor eine Verstärkungslage und ein weiteres Vlies aufthermobondiert werden.

21. Verfahren nach Anspruch 20, **dadurch gekennzeichnet, dass** das Laminat eine Wassersäule von mindestens 3 Metern bei Beibehaltung einer Wasserdampfdurchlässigkeit erhält.

22. Verfahren nach Anspruch 20 oder 21, **dadurch gekennzeichnet, dass** der Film füllstoffgefüllt auf das Bikomponenten-Vliesmaterial auflaminiert wird und zur Erzielung einer Mikroporosität in CD- und in MD-Richtung verstreckt wird.

23. Verfahren nach Anspruch 20, 21 oder 22, **dadurch gekennzeichnet, dass** ein heißes thermoplastisches füllstoffgefülltes Polyethylen enthaltenes, aus einem Extruder zugeführtes Material auf dem Bikomponenten-Vliesmaterial abgelegt wird und einen Film bildet.

24. Verfahren nach einem der vorhergehenden Ansprüche, **dadurch gekennzeichnet, dass** das Bikomponenten-Vliesmaterial in-line hergestellt wird, wobei im Mantel ein Polyethylen und im Kern ein erstes und ein zweites Homopolypropylen mit einem Polyethylen und einem UV-Stabilisator verwendet wird.

25. Verwendung des Baumaterials gemäß einem der Ansprüche 1 bis 19 als Dachunterspannbahn.

26. Verwendung des Baumaterials gemäß einem der Ansprüche 1 bis 19 als Wandabdeckung.

27. Verwendung eines Laminats gemäß einem der Ansprüche 1 bis 24 in einem Sonnenlicht-Einflußbereich.
